(19) Europäisches Patentamt
European Patent Office
Office européen des brevets

(11) EP 1 205 997 A1

(12) # EUROPEAN PATENT APPLICATION
published in accordance with Art. 158(3) EPC

(43) Date of publication:
**15.05.2002 Bulletin 2002/20**

(21) Application number: **00949929.4**

(22) Date of filing: **28.07.2000**

(51) Int Cl.⁷: **H01M 10/40**

(86) International application number:
**PCT/JP00/05053**

(87) International publication number:
**WO 01/09973 (08.02.2001 Gazette 2001/06)**

(84) Designated Contracting States:
**AT BE CH CY DE DK ES FI FR GB GR IE IT LI LU MC NL PT SE**

(30) Priority:
**29.07.1999 JP 21481499**
**25.11.1999 JP 33495799**
**25.11.1999 JP 33495899**
**25.11.1999 JP 33495999**
**26.04.2000 JP 2000126566**
**27.04.2000 JP 2000128240**
**27.04.2000 JP 2000128241**
**27.04.2000 JP 2000128242**

(71) Applicant: **BRIDGESTONE CORPORATION**
**Tokyo 104-0031 (JP)**

(72) Inventors:
- **OTSUKI, Masashi Bridgestone Corporation Chuo-ku, Tokyo 104-0031 (JP)**
- **ENDO, Shigeki Bridgestone Corporation Chuo-ku, Tokyo 104-0031 (JP)**
- **OGINO, Takao Bridgestone Corporation Chuo-ku, Tokyo 104-0031 (JP)**

(74) Representative: **Fuhlendorf, Jörn, Dipl.-Ing.**
**Patentanwälte**
**Dreiss, Fuhlendorf, Steimle & Becker,**
**Postfach 10 37 62**
**70032 Stuttgart (DE)**

(54) **NONAQUEOUS ELECTROLYTE SECONDARY CELL**

(57) The invention is to provide a non-aqueous electrolyte cell having: the advantages of no risk of igniting, no risk of exploding and catching fire in the event of short-circuit, low internal resistance, good low-temperature discharge characteristic, good degradation resistance, good self-extinguishability and flame retardancy, good electrochemical stability, high voltage, high discharge capacity, and which can be manufactured easily. Of the non-aqueous electrolyte cell of the invention that comprises a non-aqueous electrolyte, a positive electrode and a negative electrode, the first aspect is such that the non-aqueous electrolyte contains lithium ions and a phosphagen derivative having a flash point of not lower than 100°C; the second aspect is such that the non-aqueous electrolyte contains a supporting salt, an organic solvent and a phosphagen derivative, the lowermost limit of the potential window of the phosphagen derivative is at most +0.5 V, the uppermost limit thereof is at least +4.5 V, and the potential window of the organic solvent is wider than that of the phosphagen derivative; the third aspect is such that the non-aqueous electrolyte contains a supporting salt and a phosphagen derivative whose electroconductivity in a lithium salt solution (0.5 mol/liter) is at least 2.0 mS/cm; and the fourth aspect is such that the non-aqueous electrolyte contains a supporting salt and a phosphagen derivative whose dielectric constant at 25°C is at least 15 and the viscosity is at most 20 mPa·s (20 cP).

EP 1 205 997 A1

## Description

TECHNICAL FIELD

The present invention relates to non-aqueous electrolyte secondary cells favorably used in various fields that require safety.

BACKGROUND ART

In the prior art, nickel-cadmium cells have been essentially used for secondary cells especially for memory backup for AV and information devices such as personal computers and VTRs and for power sources for operating them. In recent years, non-aqueous electrolyte secondary cells which have the advantages of high voltage energy density and good self-dischargeability have been studied as substitutes for the nickel-cadmium cells and some are available on the market. At present, most notebook-sized personal computers and mobile telephones are operated by such non-aqueous electrolyte secondary cells.

In non-aqueous electrolyte secondary cells, carbon is often used for the material of negative electrodes; and for electrolytes therein, various types of organic solvents are used for reduction of the risk associated with the lithium formation on the negative electrodes and for increasing the operating voltage. In particular, in non-aqueous electrolyte secondary cells for cameras, alkali metals (especially lithium metal and lithium alloys) are specifically used for the material for negative electrodes; and for electrolytes therein, aprotic organic solvents such as esters are generally used.

The quality of non-aqueous electrolyte secondary cells of those types is high, but there are problems with respect to safety.

One problem is that the alkali metals (especially lithium metal and lithium alloys) used for the material of negative electrodes in such non-aqueous electrolyte secondary cells are highly reactive with water, and therefore, when water penetrates into the cells which are not completely sealed , the negative electrode material in the cells will react with water to give hydrogen or catch fire. Another problem is that the melting point of the lithium metals is low (about 170°C), and therefore, when there is a sudden flow of a large amount of current through the cells as occurs when there is a short-circuit, the cells will generate heat and be caused to melt. Still another problem is that the electrolyte in the cells vaporizes and decomposes to give gas when the cells generate a large amount of heat, and the cells explode or catch fire.

To solve the problems, for example, a technique of providing a safety mechanism in cylindrical cells has been proposed (Nikkan Kogyo Shinbun-sha, *Electronic Technology,* Vol. 39, No. 9, 1997), in which the safety mechanism is designed as follows: When the temperature of a cylindrical cell rises when there is a short-circuit or overcharge and the inner pressure thereof is thereby increased, a safety valve starts to operate and, at the same time, the electrode terminals are ruptured to thereby prevent any excess current above a predetermined level from running through the cell.

In this case, however, the safety mechanism does not work correctly all the time, or that is, it is not always reliable; and when it does not work correctly, excess current will flow through the cell causing it to overheat, and the cell will catch fire. In this respect, the safety mechanism proposed is still problematic, since it does not circumvent.

Given that situation, in these days, it is desired to develop a non-aqueous electrolyte secondary cell that is basically safe and does not have the risk of vaporization and decomposition of the electrolyte therein to cause fire without providing safety mechanisms such as safety valve as above. It is also desired that the non-aqueous electrolyte secondary cell is stable to the same extent of that of conventional non-aqueous electrolyte secondary cells, and has good deterioration resistance and good electrochemical stability.

The first object of the present invention is to provide a non-aqueous electrolyte cell which: is free of the risk of igniting and is free of the risk of exploding when there is a short circuit and is thus excellent with respect to safety; has therein a non-aqueous electrolyte having a low interfacial resistance and excellent low temperature discharge properties; and has excellent cell capabilities such as high voltage and high discharge capacity.

The second object of the present invention is to provide a non-aqueous electrolyte secondary cell which: has excellent long term stability which is required for cells; is safe and has excellent resistance to deterioration, as well as excellent self extinguishability or flame retardancy; has therein a non-aqueous electrolyte having low interfacial resistance; and has excellent electrochemical stability and low temperature discharge properties.

The third object of the present invention is to provide a non-aqueous electrolyte secondary cell which: has excellent cell capabilities such as cell capacity which is required for cells; has excellent self extinguishability or flame retardancy; has excellent resistance to deterioration; has therein a non-aqueous electrolyte having low interfacial resistance; has low internal resistance and excellent low temperature discharge properties.

The fourth object of the present invention is to provide a non-aqueous electrolyte secondary cell which: has excellent cell capabilities such as cell capacity, which is required for cells; has excellent self extinguishability or flame retardancy; has excellent resistance to deterioration and discharge properties at low temperatures; has therein a non-aqueous electrolyte having low interfacial resistance; and has excellent long-term stability since only a phosphate derivative is used as the solvent in the electrolyte; and is easy to fabricate.

DISCLOSURE OF THE INVENTION

The first aspect of the non-aqueous electrolyte cell of the invention that attains the first object as above comprises a non-aqueous electrolyte that contains lithium ions and a phosphagen derivative having a flash point of not lower than 100°C, and a positive electrode, and a negative electrode capable of absorbing and releasing lithium.

The second aspect of the non-aqueous electrolyte secondary cell of the invention that attains the second object as above comprises a non-aqueous electrolyte that contains a supporting salt, an organic solvent and a phosphagen derivative, and a positive electrode, and a negative electrode; in which the potential window of the phosphagen derivative is such that its lowermost limit is +0.5 V or lower and its uppermost limit is +4.5 V or higher, and the potential window of the organic solvent is broader than that of the phosphagen derivative.

The third aspect of the non-aqueous electrolyte secondary cell of the invention that attains the third object as above comprises a non-aqueous electrolyte that contains a supporting salt and a phosphagen derivative of which the electroconductivity in a lithium salt solution (0.5 mols/liter) is at least 2.0 mS/cm, and a positive electrode, and a negative electrode.

The fourth aspect of the non-aqueous electrolyte secondary cell of the invention that attains the fourth object as above comprises a non-aqueous electrolyte that contains a supporting salt and a phosphagen derivative of which the dielectric constant at 25°C is at least 15 and the viscosity is at most 20 mPa·s (20 cP), and a positive electrode, and a negative electrode.

PREFERRED EMBODIMENTS OF THE INVENTION

The non-aqueous electrolyte secondary cell of the invention comprises at least a positive electrode, a negative electrode, and a non-aqueous electrolyte.

[Positive Electrode]

The material for the positive electrode is not particularly limited, and may be selected from any known positive electrode materials. Preferred examples are metal oxides such as $V_2O_5$, $V_6O_{13}$, $MnO_2$, $MoO_3$, $LiCoO_2$, $LiNiO_2$, $LiMn_2O_4$; metal sulfides such as $TiS_2$, $MoS_2$; and electroconductive polymers such as polyaniline. Of those, especially preferred are $LiCoO_2$, $LiNiO_2$ and $LiMn_2O_4$, as they are safe and ensure high capacity, and as their wettability with electrolytes is good. One or more these materials may be used herein either singly or combined.

The shape of the positive electrode also is not particularly limited, and may be selected from known shapes for electrodes. For example, it may be configured as a sheet, columnar, tabular or spiral.

[Negative Electrode]

The material for the negative electrode is not particularly limited, as long as it has the ability to absorb and release lithium or lithium ions, and it may be selected from any known materials. Preferred examples are lithium-containing materials, specifically lithium metal itself, and alloys lithium with aluminium, indium, lead or zinc; and lithium-doped carbon materials such as graphite. Of those, especially preferred are carbon materials such as graphite, as they are very safe. One or more these materials may be used herein either singly or combined.

The shape of the negative electrode is also not particularly limited, and may be selected from known shapes as for the positive electrode as above.

[Non-aqueous Electrolyte]

The non-aqueous electrolyte contains at least a supporting salt, a phosphagen derivative, and an organic solvent.

-Supporting Salt-

Preferred examples of the supporting salt are ion sources of lithium ions, including lithium salts such as $LiClO_4$, $LiBF_4$, $LiPF_6$, $LiCF_3SO_3$, $LiAsF_6$, $LiC_4F_9SO_3$, $Li(CF_3SO_2)_2N$, $Li(C_2F_5SO_2)_2N$. One or more of these may be used herein either singly or combined.

The amount of the supporting salt to be included in the electrolyte preferably falls between 0.2 and 1 mol,

and more preferably between 0.5 and 1 mol per kg of the non-aqueous solvent component of the electrolyte.

If the amount of the supporting salt to be included therein is smaller than 0.2 mols, the non-aqueous electrolyte will not have sufficient electroconductivity and the charge-discharge characteristic of the cell will be hindered; but if the amount is larger than 1 mol, the viscosity of the non-aqueous electrolyte will increase and the lithium ions will not be sufficiently mobile, and, for the same reason as before, the non-aqueous electrolyte will not have sufficient electroconductivity and the charge-discharge characteristic of the cell will be hindered.

-Phosphagen Derivative-

The reason the non-aqueous electrolyte of the first aspect of the invention contains a phosphagen derivative is given below:

As mentioned hereinabove, in the conventional non-aqueous electrolytes in which the base is an aprotic organic solvent, the negative electrode material (containing lithium) has a low melting point (that is, the melting point of lithium metal is about 170°C). Therefore, when there is a sudden flow of a large amount of current through the cell as occurs when there is a short circuit, and when the cell is over-heated in that condition, the non-aqueous electrolyte therein vaporizes and decomposes to give gas. If so, the cell explodes or catches fire because the gas generated therein, the fire often spreads all over the surface of the electrolyte in the cell, and the cell is therefore dangerous. For example, when a UM-3 size cylindrical cell that comprises a positive electrode of an inorganic compound, a negative electrode of lithium metal, and an electrolyte of a lithium salt dissolved in an organic solvent such as an aprotic organic solvent is fabricated, and when the two electrodes of this cell are externally short-circuited, the cell heats up to 150°C or higher. In that condition, the cell often explodes and catches fire, and the fire spreads all over the surface of the electrolyte therein. However, when the non-aqueous electrolyte in the cell contains a phosphagen derivative, the non-aqueous electrolyte is prevented from vaporizing and decomposing to give gas at relatively low temperatures, and therefore the cell is prevented from exploding and catching fire because of the absence of gas therein. As a result, the cell is free of the danger of fire spreading over the surface of the electrolyte therein. Even though the electrolyte in the cell contains an aprotic organic solvent, the phosphagen derivative existing therein along with the solvent prevents the solvent from igniting, and, as a result, the cell is thereby prevented from exploding, igniting and catching fire.

Heretofore, completely solid cells are known, which comprise a polyphosphagen (solid phosphagen such as methoxyethoxy-polyphosphagen, oligoethyleneoxypolyphosphagen) as the solid electrolyte therein. They are expected to have good flame retardation, but when compared with ordinary cells comprising a liquid electrolyte, their ionic conductivity is extremely low, falling between 1/10000 and 1/1000 of that of liquid electrolyte cells. Therefore, their applications are limited only to low-discharge current cells, and they can not attain good cycle characteristics. Unlike the solid phosphagens in the solid cells, the phosphagen derivatives to be used in the electrolyte in the cell of the present invention are liquid at room temperature, and therefore, the cell containing such a liquid phosphagen derivative in its liquid electrolyte ensures good electroconductivity and cycle characteristics that are comparable to those of ordinary cells containing an ordinary liquid electrolyte.

The reason why the non-aqueous electrolyte to be used in the cell of the second to fourth aspects of the invention also contains a phosphagen derivative is given below.

As described hereinabove, when a large amount of current suddenly flows through a conventional non-aqueous electrolyte secondary cell as occurs when there is short-circuit, and when the cell is overheats in that condition, the non-aqueous electrolyte therein vaporizes and decomposes to give gas, and the cell explodes or catches fire because of the gas generated therein, and is therefore dangerous in that condition. However, if a phosphagen derivative is added to the non-aqueous electrolyte in the cell, it gives nitrogen gas and therefore exhibits good self-extinguishability or flame retardancy owing to the action of the nitrogen gas, and, as a result, the risk of cell explosion or ignition is thereby retarded.

--Flash Point--

In the first aspect of the invention, the flash point of the phosphagen derivative must not be lower than 100°C, preferably not lower than 150°C, more preferably not lower than 180°C.

The phosphagen derivative having an ignition temperature not lower than 100°C is effective for preventing the cell from catching fire, and, even if the cell catches fire, the phosphagen derivative therein acts to prevent the fire from spreading over the electrolyte in the cell and therefore reduces the risk of cell damage.

Specifically, the flash point refers to the temperature at which the substance ignites and the fire covers at least 75 % of the surface of the ignited substance. The flash point is a criterion for determining the tendency of a substance to form a combustible mixture with air. In the invention, the flash point of the phosphagen derivative to be used is measured according to a mini-flash method of using a closed cup in the manner as follows: An automatic ignition tester (Grabner Instruments' Miniflash) is provided, which comprises a small chamber of 4 ml in size, a heating

cup, a frame, an ignition unit and an automatic flame sensor system. One ml of the sample to be tested is put into the heating cup, which is then covered. In that condition, the heating cup is heated at the top of its cover. With that, the sample is heated to certain temperature intervals so that the mixture of the vapor and air in the cup is ignited at predetermined temperatures, and fire in the cup is detected. The temperature at which the mixture in the cup has started to ignite is read, and this is the flash point of the sample.

In the cell of the second to fourth aspects of the invention, the flash point of the phosphagen derivative used is preferably not lower than 100°C, and more preferably not lower than 150°C in order to prevent the cell from catching fire.

--Potential Window--

In the cell of the second aspect of the invention, the potential window of the phosphagen derivative used must fall within a predetermined range which must be wider than the potential window of the organic solvent therein. The potential ' window for the non-aqueous electrolyte secondary cell of the invention refer to the voltage range in which the cell undergoes no electrochemical reaction. The ratio of $Li/Li^+$ is used for the reference electrode here.

The lowermost limit of the potential window of the phosphagen derivative in the non-aqueous electrolyte in the cell is at most +0.5 V and its uppermost limit is at least +4.5 V. Preferably, the lowermost limit is at most 0 V and the uppermost limit is at least +5 V.

If the lowermost limit of the potential window of the phosphagen derivative is larger than +0.5 V, or if the uppermost limit thereof is smaller than +4.5 V, the potential window of the phosphagen derivative used is too narrow and is therefore unfavorable since the non-aqueous electrolyte in the cell electrolyzes by itself in the charge-discharge cycle of the cell to shorten the life of the cell, or the cell will explode because of the gas generated therein, and is therefore dangerous. Conversely, when both the lowermost limit and the uppermost limit of the potential fall within the ranges defined as above, the non-aqueous electrode in the cell is always stable at the potential applied to the cell in the charge-discharge cycle thereof, and therefore the cell is stable for a long period of time, and thus has a long life, and it is free from the risk of explosion.

The potential window referred to herein is measured with a cyclic voltammeter (manufactured by Solatron). Specifically, the measurement is carried under conditions such that the working electrode is Pt, the counter electrode is Pt, the reference electrode is Li metal, the supporting salt is tetraethylammonium tetrafluoroborate (manufactured by Aldrich) (the amount added is 1 mol/liter), and the scanning potential is 10 mV/sec.

More preferably, the lowermost limit of the potential window of the phosphagen derivative falls between -0.5 and 0 V, and the uppermost limit thereof falls between +5 V and +8.5 V. In the invention, the potential window may have any combination of the uppermost limit and the lowermost limit falling within the defined ranges as above.

In case where the phosphagen derivative used herein has a halogen-containing substituent in its molecular structure, the lowermost limit and the uppermost limit of the potential window may shift in the positive direction to some degree, without any problems with respect to the potential of the phosphagen derivative.

--Electroconductivity--

In the cell of the third aspect of the invention, the electroconductivity of the phosphagen derivative in a lithium salt solution (concentration: 0.5 mols/liter) must be at least 2.0 mS/cm, and preferably falls between 4.0 and 15 mS/cm.

Electroconductivity of the phosphagen derivative in the cell lower than 2.0 mS/cm is unfavorable since electroconductivity necessary for the cell is not attained. The internal resistance of the cell will therefore increase and, as a result, the potential depression or elevation in the charge-discharge cycle of the cell will be great. Conversely, when the electroconductivity of the phosphagen derivative is not lower than 2.0 mS/cm, the non-aqueous electrolyte in the cell has sufficient electroconductivity to prevent the internal resistance of the cell from increasing, and therefore the potential depression or elevation in the charge-discharge cycle of the cell can be suppressed.

The electroconductivity is measured by the method described below. The non-aqueous electrolyte secondary cell of the invention is tested while a constant current of 5 mA is applied thereto under predetermined conditions (temperature: 25°C, pressure: normal pressure, water content: at most 10 ppm), and its electroconductivity is measured with a conductometer (Radiometer Trading's Model CDM210 (trade name)).

Theoretically, the conductance (Gm) of the non-aqueous electrolyte in the cell is first obtained and the cable resistance (R) is subtracted therefrom to give the conductance (G) of the electrolyte alone, and the electroconductivity is derived from the resulting value (G) and the known cell constant (K) according to the following formula:

$$\text{Electroconductivity } K = G \cdot K \text{ (S/cm)}.$$

The internal resistance (Ω) of the non-aqueous electrolyte secondary cell of the invention preferably falls between 0.1 and 0.3 (Ω), and more preferably between 0.1 and 0.25 (Ω).

The internal resistance may be measured by any known method. For example, a sample of the non-aqueous electrolyte secondary cell of the invention is fabricated, and its charge-discharge curve is measured, whereupon the potential fluctuation in the case of charge rest and discharge rest is measured.

--Dielectric Constant--

In the cell of the fourth aspect of the invention, the dielectric constant of the phosphagen derivative at 25°C must be at least 15, and preferably falls between 15 and 90, and more preferably between 30 and 90.

If the dielectric constant of the phosphagen derivative in the cell is smaller than 15, the lithium salt, a source of lithium ions in the cell is difficult to dissociate and the number of free ions in the non-aqueous electrolyte in the cell will decrease, and, as a result, the electrolyte will not have sufficient electroconductivity and the cell capacity of non-aqueous secondary cell will be lowered.

The dielectric constant is measured between parallel plane capacitor electrodes, using an impedance analyzer (Solatron's Function Generator) under the conditions described below. That is, a parallel plane capacitor electrode unit of stainless steel having a capacity of 3 ml is used and the capacitor is measured when it is filled with 3 ml of the non-aqueous electrolyte to be tested, and when it is empty ($C_0$ and C, respectively). The dielectric constant of the electrolyte is represented by:

$$\varepsilon r = \varepsilon/\varepsilon_0 = C/C_0$$

wherein $\varepsilon = \varepsilon \cdot S/d$, and $C_0 = \varepsilon_0 \cdot S/d$.

--Content--

In the cell of the first aspect of the invention, the phosphagen derivative content of the non-aqueous electrolyte is preferably larger than 2.5 % by volume, and more preferably falls between 25 and 90 % by volume, and even more preferably between 50 and 75 % by volume.

If the content is smaller than 25 % by volume, the cell can not be prevented from exploding and catching fire; but if larger than 90 %, it is as if the phosphagen derivative was being used alone in the electrolyte so the viscosity of the electrolyte increases and, as a result, the desired lithium ion conductivity is difficult to attain. Also, in this case, when the cell operates at low temperatures of the freezing point or lower, its capabilities will be insufficient.

In the cell of the second and third aspect of the invention, the phosphagen derivative content of the non-aqueous electrolyte is preferably at least 20 % by volume for satisfactory expression of self-extinguishability of the cell, and more preferably at least 30 % by volume for satisfactory expression of flame retardancy thereof. The uppermost limit of the phosphagen derivative content is not particularly limited, and may be up to 100 % by volume.

If the phosphagen derivative content thereof is smaller than 20 % by volume, the non-aqueous electrolyte will not have sufficient self-extinguishability; and if less than 30 % by volume, flame retardation will not be sufficient. The most preferred range of the phosphagen derivative content varies, depending on the type of the compound, but in general, an increase in the content will enhance the flame retardancy of the electrolyte.

"Self-extinguishability" is meant to indicate the property of a substance of such that the ignited substance is extinguished within a line of from 25 to 100 mm and materials falling therefrom do not catch fire, when tested according to the self-extinguishability test method described below. The "flame retardancy" is meant to indicate the property of a substance such that the fire of the ignited substance does not reach a 25 mm line and the materials falling therefrom do not catch fire, when tested according to the flame retardancy test described below.

The self-extinguishability and the flame retardancy are determined according to a method based on the UL94HB method of the UL (Underlighting Laboratory) standards, in which the profile of the fire of a substance ignited in an atmosphere is analyzed. Specifically, according to the UL test standards, 1.0 ml of a sample of the electrolyte to be tested is infiltrated into noncombustible quartz fibers to prepare a sample piece of 127 mm × 12.7 mm, and the phenomena of its properties of ignition, combustion, carbide formation and secondary ignition are observed to evaluate the self-extinguishability and the flame retardancy of the sample piece.

In the cell of the fourth aspect of the invention, the phosphagen derivative content of the non-aqueous electrolyte may be 100 % by weight.

In general, solvents having a high dielectric constant are highly viscous. Therefore, when such a solvent having a high dielectric constant is used in a non-aqueous electrolyte, a predetermined amount of a low-viscosity co-solvent must be added thereto to thereby lower the viscosity of the electrolyte. In the fourth aspect of the invention,

however, the phosphagen derivative used has a high dielectric constant but its viscosity is low, and therefore, this does not require any other co-solvent for viscosity reduction. Accordingly, in the fourth aspect of the invention, the non-aqueous electrolyte is easy to prepare, and there is no need to carry out phase separation. Therefore, in this aspect by using the non-aqueous electrolyte of this type, it is possible to fabricate non-aqueous electrolyte secondary cells which are stable for a long period of time.

--Viscosity--

In the cell of the first aspect of the invention, the viscosity at 25°C of the non-aqueous electrolyte is preferably not higher than 10 mPa·s (cP).

If the viscosity is higher than 10 mPa·s (cP), the migration of the lithium salt in the cell is insufficient and the electroconductivity of the non-aqueous electrolyte therein is low, and, as a result, the charge-discharge operation of the cell will be often hindered.

The viscosity is measured with a viscometer (R-type viscometer, Toki Sangyo's Model RR500-SL). Specifically, a sample of the electrolyte is tested in the viscometer at different revolutions, 1 rpm, 2 rpm, 3 rpm, rpm, 7 rpm, 10 rpm, 20 rpm and 50 rpm for 120 seconds, and the number of revolutions at which the viscometer's indication falls between 50 and 60 % is read. At the read number of revolutions, the sample is tested to determine its viscosity.

In the cell of the second and third aspects of the invention, the viscosity at 25°C of the phosphagen derivative is preferably not higher than 100 mPa·s (100 cP), and more preferably not higher than 20 mPa·s (20 cP) in order for the non-aqueous electrolyte containing the compound to have low viscosity.

In the cell of the fourth aspect of the invention, the viscosity at 25°C of the phosphagen derivative is not higher than 20 mPa·s (20 cP), and preferably not higher than 10 mPa·s (10 cP). If the phosphagen derivative has a viscosity that falls within the range defined above, it will not require any additional low-viscosity co-solvent in the non-aqueous electrolyte containing it in order to make the electrolyte sufficiently conductive. Therefore, in this aspect, by using the phosphagen derivative of this type, it becomes easy to fabricate non-aqueous electrolyte secondary cells which are stable for a long period of time.

--Molecular Structure--

In the cell of the first to fourth aspects of the invention, the phosphagen derivative to be used is not particularly limited in view of the molecular structure thereof so long as it is liquid at room temperature (25°C). For use in the cell of the invention, a phosphagen derivative of any type can be suitably selected depending on the electroconductivity of the non-aqueous electrolyte containing it and on the object of the invention.

In the cell of the first to fourth aspects of the invention, the phosphagen derivative to be used is not particularly limited in view of the molecular structure thereof, and may be any one suitably selected in accordance with the object of the invention. However, preferred are those having a halogen-containing substituent. The halogen element is preferably fluorine, chlorine or bromine, and more preferably fluorine.

The advantage of the phosphagen derivative having a halogen-containing substituent in its molecular structure is that the halogen gas released from the phosphagen derivative more effectively expresses the self-extinguishability and the flame retardancy of the non-aqueous electrolyte even when the phosphagen derivative content of the electrolyte is small. Compounds having a halogen-containing substituent will be often problematic in view of halogen radical generation. However, the phosphagen derivative to be used in the cell of the first to fourth aspects of the invention is selected so that the phosphorus element in the molecular structure of the compound can trap the released halogen radical to thereby form a stable phosphorus halide. For this reason, the phosphagen derivative to be used in the invention is free from the problem.

In the cell of the first to fourth aspects of the invention, the halogen content of the phosphagen derivative preferably falls between 2 and 80 % by weight, more preferably between 2 and 60 % by weight, even more preferably between 2 and 50 % by weight. If the halogen content is smaller than 2 % by weight, the halogen introduction into the compound will be ineffective; but if larger than 80 % by weight, the viscosity of the compound will increase, and when the compound having such a high viscosity is added to the non-aqueous electrolyte, the electroconductivity of the electrolyte will often be lowered.

In the cell of the first to fourth aspects of the invention, the phosphagen derivative is preferably a linear phosphagen derivative of the following general formula (1) or a cyclic phosphagen derivative of the following general formula (2):

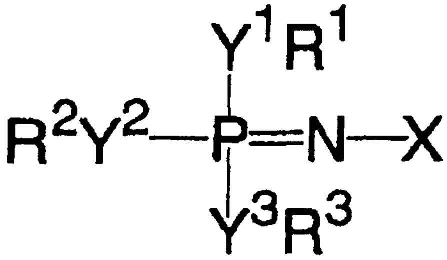

(1)

In formula (1), $R^1$, $R^2$ and $R^3$ each represents a monovalent substituent or a halogen element; X represents an organic group containing at least one element selected from carbon, silicon, germanium, tin, nitrogen, phosphorus, arsenic, antimony, bismuth, oxygen, sulfur, selenium, tellurium and polonium; and $Y^1$, $Y^2$ and $Y^3$ each represents a divalent linking group, a divalent element or a single bond.

$R^1$, $R^2$ and $R^3$ are not particularly limited provided that each represents a monovalent substituent or a halogen element. The monovalent substituent includes, for example, an alkoxy group, an alkyl group, a carboxyl group, an acyl group and an aryl group. For the halogen atom, for example, preferred are those mentioned hereinabove. Of those groups, especially preferred is an alkoxy group in view of enabling the non-aqueous electrolyte to have low viscosity. $R^1$ to $R^3$ may be the same or different.

The alkoxy group includes, for example, methoxy, ethoxy, propoxy and butoxy groups, as well as alkoxy-substituted alkoxy groups such as methoxyethoxy and methoxyethoxyethoxy groups. It is particularly preferable that $R^1$ to $R^3$ are all methoxy, ethoxy, methoxyethoxy or methoxyethoxyethoxy groups. It is even more preferable that they are all methoxy or ethoxy groups as the phosphagen derivatives of that type have a low viscosity and a high dielectric constant.

The alkyl group includes, for example, methyl, ethyl, propyl, butyl and pentyl groups.

The acyl group includes, for example, formyl, acetyl, propionyl, butyryl, isobutyryl and valeryl groups.

The aryl group includes, for example, phenyl, tolyl and naphthyl groups.

The hydrogen element(s) in these substituents are preferably substituted with halogen element (s) as in the above.

X is preferably an organic group containing a least one element selected from carbon, silicon, nitrogen, phosphorus, oxygen and sulfur, as the compounds of this type are nontoxic and have few negative effects on the environment. More preferably, the organic group has a structure of formula (3) shown below.

The group for $Y^1$, $Y^2$ and $Y^3$ includes, for example, a group $CH_2$, and groups containing any of the elements oxygen, sulfur, selenium, nitrogen, boron, aluminium, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel. Of those, preferred are $CH_2$, and groups containing any of the elements oxygen, sulfur, selenium and nitrogen. It is preferable that $Y^1$, $Y^2$ and $Y^3$ contain the element sulfur or selenium in view of enhancing the flame retardancy of the non-aqueous electrolyte. $Y^1$ to $Y^3$ may be the same or different.

$$(PNR^4{}_2)_n \qquad (2)$$

In formula (2), $R^4$ represents a monovalent substituent, or a halogen element; and n falls between 3 and 15.

$R^4$ is not particularly limited provided that it represents a monovalent substituent or a halogen element, and may be suitably selected from these groups. The monovalent substituent for $R^4$ includes, for example, an alkoxy group, an alkyl group, a carboxyl group, an acyl group and an aryl group. The two substituents may be bonded to each other. For the halogen atom for $R^4$, preferred are those mentioned hereinabove. $R^4$ is especially preferably an alkoxy group in view of reducing the viscosity of the non-aqueous electrolyte.

The alkoxy group includes, for example, methoxy, ethoxy, methoxyethoxy, propoxy and phenoxy groups. Of those, especially preferred are methoxy, ethoxy and methoxyethoxy groups.

The hydrogen element(s) in these substituents are preferably substituted with halogen element (s) as in the above.

Formula (3)

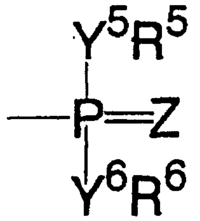 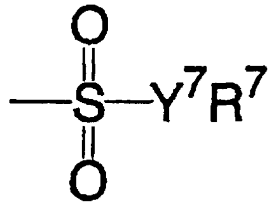 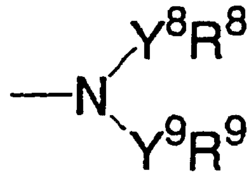

(A) (B) (C)

In formula (3), $R^5$ to $R^9$ each represents a monovalent substituent or a halogen element; $Y^5$ to $Y^9$ each represents a divalent linking group, a divalent element or a single bond; and Z represents a divalent group or a divalent element.

For $R^5$ to $R^9$, preferred are those of the monovalent substituent or halogen element given as examples for $R^1$ to $R^3$. The organic groups for these may be the same or different. $R^5$ and $R^6$, and $R^8$ and $R^9$ may or may not be bonded to each other to form a ring.

Examples of the groups for $Y^5$ to $Y^9$ are the divalent linking groups or the other divalent groups given as examples for $Y^1$ to $Y^3$. Of those, preferred for $Y^5$ to $Y^9$ are groups containing a sulfur or selenium element in view of improving the flame retardancy of the non-aqueous electrolyte. The organic groups for these may be the same or different.

Z includes, for example, $CH_2$, CHR (in which R indicates, for example, an alkyl group, an alkoxy group or a phenyl group, and the same applies hereinunder), NR, as well as groups containing any of the elements oxygen, sulfur, selenium, boron, aluminium, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel. Of those, preferred are $CH_2$, CHR, NR, and groups containing any of the elements oxygen, sulfur and selenium, in view of improving the flame retardancy of the non-aqueous electrolyte. More preferred are groups containing the element sulfur or selenium.

Of the organic groups of formula (3), the phosphorus-containing organic group (A) is especially preferred in view of improving ignition resistance of the cell of the first embodiment of the invention and self-extinguishability and the flame retardancy of the cell of the second to fourth aspects. Also especially preferred is the sulfur-containing organic group (B) in view of reducing the interfacial resistance of the non-aqueous electrolyte.

In formulae (1) to (3), $R^1$ to $R^9$, $Y^1$ to $Y^3$, $Y^5$ to $Y^9$, and Z are suitably selected, thereby favorably controlling the viscosity and the solubility of the non-aqueous electrolyte to be used in the cell of the invention. The potential window in the non-aqueous electrolyte secondary cell of the invention can thus be favorably controlled within a desired range. For example, a phosphagen derivative of formula (2) in which $R^4$ is a propoxy group has a viscosity at 25°C of 60 mPa·s (cP), and it is a good solvent for the non-aqueous electrolyte. The solubility of lithium salts in the phosphagen derivative of this type is such that up to about 0.5 mols of a lithium salt is soluble in one kg of the compound. Accordingly, the phosphagen derivative exhibits good lithium ion conductivity, when compared to any other ordinary organic solvent-type electrolyte.

In the cell of the fourth aspect of the invention, the phosphagen derivative must have a low viscosity and a high dielectric constant. Therefore, those of the following general formula (4) are preferred for the phosphagen derivative.

Formula (4)

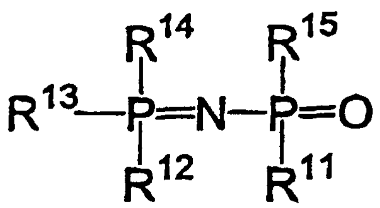

In formula (4), $R^{11}$, $R^{12}$, $R^{13}$, $R^{14}$ and $R^{15}$ each represents an alkoxy group having from 1 to 8 carbon atoms, or an ether bond-containing group.

The alkoxy group includes, for example, methoxy, ethoxy, propoxy and butoxy groups.

The ether bond-containing group may be, for example, an alkoxy-substituted alkoxy group, including, for example, methoxyethoxy and methoxyethoxyethoxy groups.

Preferably, all these groups $R^{11}$, $R^{12}$, $R^{13}$, $R^{14}$ and $R^{15}$ are methoxy groups or ethoxy groups, as the phosphagen derivatives of the type have a low viscosity and a high dielectric constant. More preferably, $R^{11}$ and $R^{15}$ each are an electron-attracting group, and $R^{12}$, $R^{13}$ and $R^{14}$ each are an electron-donating group.

Preferably, the hydrogen element(s) in the alkoxy group or the ether bond-containing group in formula (4) are substituted with halogen element(s) as in the above.

In the cell of the first to fourth aspects of the invention, one or more different types of phosphagen derivatives such as those mentioned hereinabove may be used either singly or combined.

-Organic Solvent-

In the cell of the first to third aspects of the invention, the organic solvent is especially preferably an aprotic organic solvent in view of safety. In the cell of the fourth aspect, optionally used is such an organic solvent.

If the non-aqueous electrolyte contains an aprotic organic solvent, the aprotic organic solvent does not react with the material of the negative electrode in the cell, and therefore the cell is highly safe. In addition, the viscosity of the non-aqueous electrolyte can be readily reduced, and the electrolyte readily achieves ionic conductivity suitable for non-aqueous electrolyte secondary cells.

In the cell of the first and third aspects of the invention, the aprotic organic solvent is not particularly limited; and in the cell of the second aspect, the solvent also is not particularly limited so long as its potential window is wider than that of the phosphagen derivative existing in the non-aqueous electrolyte. For reducing the viscosity of the electrolyte in the cell of the invention, preferred for the organic solvent are ether compounds and ester compounds, including, for example, 1,2-dimethoxyethane, tetrahydrofuran, dimethyl carbonate, diethyl carbonate, diphenyl carbonate, ethylene carbonate, propylene carbonate, γ-butyrolactone, γ-valerolactone, methylethyl carbonate, and ethylmethyl carbonate.

Of those, especially preferred are cyclic ester compounds such as ethylene carbonate, propylene carbonate, and γ-butyrolactone; and linear ester compounds such as 1,2-dimethoxyethane, dimethyl carbonate, ethylmethyl carbonate, and diethyl carbonate. The cyclic ester compounds are preferred as they have a high dielectric constant and the solubility of lithium salts in them is high; and the linear ester compounds are also preferred as their viscosity is low and therefore they reduce the viscosity of the non-aqueous electrolyte. One type of the organic solvent may be used alone herein, but preferably, two or more different types of such organic solvents are combined for use herein.

--Viscosity of Aprotic Organic Solvent--

In the cell of the first aspect of the invention, the viscosity at 25°C of the aprotic organic solvent is preferably at most 5 mPa·s (cP), more preferably at most 2.5 mPa·s (cP). The solvent whose viscosity is at most 5 mPa·s (cP) is preferred as it readily reduces the viscosity of the non-aqueous electrolyte containing it.

In the cell of the second and third aspects of the invention, the viscosity at 25°C of the aprotic organic solvent is preferably at most 10 mPa·s (cP), in view of reducing the viscosity of the non-aqueous electrolyte; and in that of the third aspect, the viscosity is more preferably at most 5 mPa·s (cP).

--Aprotic Organic Solvent Content--

In the cell of the first aspect of the invention, the aprotic organic solvent content of the non-aqueous electrolyte preferably falls between 10 and 75 % by volume, and more preferably between 25 and 50 % by volume.

If the solvent content is smaller than 10 %, the viscosity of the non-aqueous electrolyte will not be lowered enough; but if larger than 75 %, the flash point of the non-aqueous electrolyte will be lower than 100°C and it is unfavorable from the viewpoint of safety.

--Preferred Embodiments of Non-aqueous Electrolyte--

In the cell of the second and third aspects of the invention, it is desirable that the non-aqueous electrolyte contains a phosphagen derivative, $LiPF_6$ and ethylene carbonate in view of the self-extinguishability and the flame retardancy of the electrolyte.

In the cell of the first aspect, the non-aqueous electrolyte has good ignition retardancy even if the amount of the phosphagen derivative therein is small, despite the above description in this respect. Specifically, if the phosphagen derivative content of the electrolyte in the cell is larger than 2.5 % by volume, the electrolyte is effective for preventing the cell from exploding and catching fire.

In the cell of the second and third aspects, the non-aqueous electrolyte has good self-extinguishability and good flame retardancy even though the amount of the phosphagen derivative therein is small, despite the above description in this respect. Specifically, if the phosphagen derivative content of the electrolyte in the cell falls between 1.5 and 2.5 % by volume, the electrolyte exhibits good self-extinguishability; and if larger than 2.5 % by volume, the electrolyte hibits flame retardancy.

[Other Members]

The non-aqueous electrolyte secondary cell of the first to fourth aspects of the invention comprises other members in addition to those mentioned hereinabove. Preferably, it contains a separator between the positive and negative electrodes for preventing the two electrodes from direct contact with each other to thereby prevent current short-circuit in the cell, and any other known members generally used in ordinary cells.

The material of the separator must be one which ensures that two electrodes are prevented from direct contact with each other, and must allow the electrolyte to pass through or be absorbed. Preferably, it is made of a nonwoven fabric or thin film of synthetic resin such as polytetrafluoroethylene, polypropylene or polyethylene. Especially preferred is a micro-porous film of polypropylene or polyethylene having a thickness of from 20 to 50 μm or so.

<Capacity of Non-aqueous Electrolyte Secondary Cell>

The capacity of the non-aqueous electrolyte secondary cell of the invention when $LiCoO_2$ is used for the positive electrode therein, preferably falls between 140 and 145 (mAh/g), and more preferably between 143 and 145 (mAh/g) in view of the charge-discharge capacity (mAh/g) thereof.

The charge-discharge capacity of the cell may be measured by any known method. For example, the cell which is in the form of a semi-open cell or a closed coin cell (see *Lithium Ion Secondary Cells* by Masayuki Yoshio, Nikkan Kogyo Shinbun-sha) is tried in a charge-discharge cycle test, in which the capacity of the cell tested is derived from the data of the charge current (mA), the time (t) and the electrode weight (g).

<Shape of Non-aqueous Electrolyte Secondary Cell>

The shape of the non-aqueous electrolyte secondary cell of the invention is not specifically defined, and may be any known one preferably including, for example, coin cells, button cells, paper cells, and angular or spiral cylindrical cells.

The non-aqueous electrolyte secondary cell having a spiral structure of the invention may be fabricated, for example, by preparing a sheet-formed positive electrode, putting a negative electrode (sheet-formed) thereon via a collector sandwiched therebetween, and winding up the resulting structure into a cell having a spiral structure.

<Properties of Non-aqueous Electrolyte Secondary Cell>

The non-aqueous electrolyte secondary cell of the first aspect of the invention is free of the risk of igniting, is free of the risk of exploding and igniting when there is a short circuit and is thus safe; has therein a non-aqueous electrolyte having a low interfacial resistance and excellent low-temperatures discharge properties and; has excellent

cell capabilities such as high voltage and high discharge capacity.

The non-aqueous electrolyte secondary cell of the second aspect of the invention has excellent long term stability which is required for cells; is safe; has excellent self extinguishability or flame retardancy and has excellent resistance to deterioration; has therein a non-aqueous electrolyte having low interfacial resistance; and has excellent electrochemical stability and low-temperature discharge properties.

The non-aqueous electrolyte secondary cell of the third aspect of the invention has excellent cell capabilities such as cell capacity which is required for cells; has excellent self extinguishability or flame retardancy; has excellent resistance to deterioration; has therein a non-aqueous electrolyte having low interfacial resistance; has low internal resistance and excellent low-temperature discharge properties.

The non-aqueous electrolyte secondary cell of the fourth aspect of the invention has excellent cell capabilities such as cell capacity, which is required; has excellent self extinguishability or flame retardancy; has excellent resistance to deterioration and excellent long-term stability; has therein a non-aqueous electrolyte having low interfacial resistance; is easy to fabricate and has excellent discharge properties at low temperatures.

The invention is described in detail with reference to the following Examples and Comparative Examples, which, however, are not intended to restrict the scope of the invention.

<First Aspect of the Invention>

The flash point and the viscosity of liquids used herein are measured according to the methods mentioned above, using an automatic ignition tester (Grabner Instruments' Miniflash) and a viscometer (R-type viscometer, Toki Sangyo's Model RE500-SL).

(Example 1)

[Preparation of Electrodes]

For the positive electrode active material, herein used was a cobalt oxide of a chemical formula $LiCoO_2$. To 100 parts of $LiCoO_2$, added were 10 parts of acetylene black (electroconductivity aid) and 10 parts of Teflon binder (binder resin), and these were kneaded in an organic solvent (mixed solvent of ethyl acetate/ethanol, 50/50 % by volume). The resulting mixture was rolled into a thin, positive electrode sheet having a thickness of 100 μm and a width of 40 mm.

Next, a 25 μm-thick aluminium foil (collector) coated with an electroconductive adhesive was sandwiched between the thus-prepared, two positive electrode sheets, and the resulting structure was wound up along with a 150 μm-thick lithium metal foil via a 25 μm-thick separator (porous film of polypropylene) put therebetween to construct a cylindrical electrode. The length of the positive electrode of the cylindrical electrode was about 260 mm.

[Fabrication of Non-aqueous Electrolyte Secondary Cell]

The thus-obtained cylindrical electrode was housed in a UM-3 size cell body, and a non-aqueous electrode that had been prepared by dissolving a lithium salt $LiPF_6$ in 1 ml of a phosphagen derivative (this is a linear EO-type phosphagen derivative of formula (1) in which X is the organic group (A) of formula (3), $Y^1$ to $Y^3$ and $Y^5$ to $Y^6$ are all single bonds, $R^1$ to $R^3$ and $R^5$ to $R^6$ are all ethoxy groups, and Z is oxygen, having a flash point of 155°C and a viscosity at 25°C of 5.8 mPa·s (cP)) to have a lithium salt concentration of 0.5 mols/kg was introduced thereinto, and sealed up. In that manner, 10 UM-3 size lithium cells were fabricated.

The obtained non-aqueous electrolyte secondary cells were tested at 20°C for their initial cell characteristics (voltage, internal resistance), and then subjected to charge-discharge cycles according to the test method described below to evaluate the cell capabilities. In addition, the low-temperature discharge capacity of the cells was measured according to the method described below to evaluate the low-temperature discharge characteristic of the cells. The test data obtained, and the viscosity (mPa·s (cP)) and the flash point (°C) of the non-aqueous electrolyte used are shown in Table 1.

-Method of Testing Charge-Discharge Cycle Characteristic-

The cells were subjected to 50 charge-discharge cycles. In every cycle, the uppermost voltage was 4.5 V, the lowermost voltage was 3.0 V, the discharge current was 100 mA and the charge current was 50 mA. The charge-discharge capacity of each cell subjected to the cycle test was compared with the initial-stage charge-discharge capacity thereof, from which was derived the capacity reduction after 50 cycles. Three cells in all were subjected to the same cycle test, and the data were averaged. The average indicates the charge-discharge cycle characteristic of the

cells tested.

-Method of Testing Low-Temperature Discharge Characteristic (low-temperature discharge capacity)-

The cells were subjected to 50 charge-discharge cycles in the same manner as in the "charge-discharge cycle test" as above, except that the ambient temperature in cell discharging was low (-10°C, -20°C). The data of the low-temperature discharge capacity of each cell were compared with those of the 20°C discharge capacity thereof, from which was derived the capacity reduction after the low-temperature cycles according to the formula given below. Three cells in all were subjected to the same cycle test, and the data were averaged. The average indicates the low-temperature discharge characteristic of the cells tested. The result is given in Table 1.

$$\text{Discharge Capacity Reduction} = 100 - (\text{low-temperature discharge capacity}/20°\text{C discharge capacity}) \times 100\ (\%).$$

(Example 2)

A non-aqueous electrolyte secondary cell was fabricated and tested in the same manner as in Example 1, except that used was a linear MO-type phosphagen derivative of formula (1) (in which X is the organic group (A) of formula (3), $Y^1$ to $Y^3$ and $Y^5$ to $Y^6$ are all single bonds, $R^1$ to $R^3$ and $R^5$ to $R^6$ are all methoxy groups, and Z is oxygen) having a flash point of 150°C and a viscosity at 25°C of 4.8 mPa·s (cP), in place of the linear EO-type phosphagen derivative of formula (1) (in which X is the organic group (A) of formula (3), $Y^1$ to $Y^3$ and $Y^5$ to $Y^6$ are all single bonds, $R^1$ to $R^3$ and $R^5$ to $R^6$ are all ethoxy groups, and Z is oxygen), in preparing the electrode structure. The test data obtained, and the viscosity (mPa·s (cP)) and the flash point (°C) of the non-aqueous electrolyte used are shown in Table 1.

(Example 3)

A non-aqueous electrolyte secondary cell was fabricated and tested in the same manner as in Example 1, except that ethylene carbonate (aprotic organic solvent, having a viscosity at 25°C of 2.0 mPa·s (cP)) was added to the non-aqueous electrolyte so that the volume fraction was 30 % by volume of the electrolyte in preparing the electrode structure. The test data obtained, and the viscosity (mPa·s (cP)) and the flash point (°C) of the non-aqueous electrolyte used are shown in Table 1.

(Example 4)

A non-aqueous electrolyte secondary cell was fabricated and tested in the same manner as in Example 1, except that γ-butyrolactone (aprotic organic solvent, having a viscosity at 25°C of 1.9 mPa·s (cP)) was added to the non-aqueous electrolyte such that the volume fraction was 50 % by volume of the electrolyte in preparing the electrode structure. The test data obtained, and the viscosity (mPa·s (cP)) and the flash point (°C) of the non-aqueous electrolyte used are shown in Table 1.

(Comparative Example 1)

A non-aqueous electrolyte secondary cell was fabricated and tested in the same manner as in Example 1, except that used was a mixture of ethylene carbonate and diethyl carbonate (in a ratio ethylene carbonate/diethyl carbonate of 1/1 by volume) having a flash point of 39°C (1 ml), in place of the linear EO-type phosphagen derivative of formula (1) (in which X is the organic group (A) of formula (3), $Y^1$ to $Y^3$ and $Y^5$ to $Y^6$ are all single bonds, $R^1$ to $R^3$ and $R^5$ to $R^6$ are all ethoxy groups, and Z is oxygen, and which has a flash point of 155°C and a viscosity at 25°C of 5.8 mPa·s (cP)), in preparing the electrode structure. The test data obtained, and the viscosity (mPa·s (cP)) and the flash point (°C) of the non-aqueous electrolyte used are shown in Table 1.

Table 1

| | Viscosity (mPa·s) | Voltage (V) | Internal Resistance (mΩ) | Capacity Reduction after 50 cycles (%) | Flash Point (°C) | Evaluation of Low-temperature Discharge Characteristic (discharge capacity reduction after 50 cycles) | |
|---|---|---|---|---|---|---|---|
| | | | | | | temperature of discharging: -10°C | temperature of discharging: -20°C |
| Example 1 | 5.8 | 2.9 | 150 | 8 | 155 (°C) | at most 40 % | at most 70 % |
| Example 2 | 4.8 | 2.9 | 140 | 5 | 150 (°C) | at most 40 % | at most 70 % |
| Example 3 | 4.0 | 2.9 | 140 | 5 | 148 (°C) | at most 40 % | at most 70 % |
| Example 4 | 3.0 | 2.8 | 140 | 4 | 101 (°C) | at most 40 % | at most 70 % |
| Comp. Ex. 1 | 1.8 | 3.0 | 140 | 4 | 39 (°C) | at least 50 % | at least 85 % |

In Examples 1 to 4 demonstrating the non-aqueous electrolyte secondary cells of the first aspect of the invention, the flash point of the non-aqueous electrolyte used is satisfactorily high. It is therefore obvious that the cells of these Examples are free of the risk of igniting and from the risk of exploding or catching fire when there is a short-circuit, and are safe when used. In particular, in Examples 3 and 4, the viscosity of the non-aqueous electrolyte used is low. It is therefore obvious that the cells of these Examples are highly resistant to ignition and the electroconductivity of the electrolyte used therein is high.

<Second Aspect of the Invention>

The potential window of the aprotic organic solvent used in the following Examples is wider than that of the phosphagen derivative therein.

(Example 5)

[Preparation of Non-aqueous Electrolyte]

20 ml of a phosphagen derivative (this is a linear EO-type phosphagen derivative of formula (1) in which X is the organic group (A) of formula (3), $Y^1$ to $Y^3$ and $Y^5$ to $Y^6$ are all single bonds, $R^1$ to $R^3$ and $R^5$ to $R^6$ are all ethoxy groups, and Z is oxygen, having a viscosity at 25°C of 5.8 mPa·s (5.8 cP) and having a flash point of 155°C) was added to 80 ml of γ-butyrolactone (aprotic organic solvent having a viscosity at 25°C of 1.7 mPa·s (1.7 cP)), the ratio of the phosphagen derivative being 20 % by volume. A lithium salt, $LiBF_4$ (concentration: 0.5 mols/kg) was added to this to prepare a non-aqueous electrolyte.

The thus-prepared, non-aqueous electrolyte was tested for the combustion profile, according to a method based on the UL94HB method of the UL (Underlighting Laboratory) standards. Specifically, in an atmospheric condition, this was ignited to check the flaming behavior thereof. The test data indicate the self-extinguishability and the flame retardancy of the electrolyte. The result is given in Table 2.

<Flame Retardancy Evaluation>

According to the UL test standards, 1.0 ml of a sample of the electrolyte to be tested was infiltrated into noncombustible quartz fibers to prepare a sample piece of 127 mm × 12.7 mm, and the test piece was ignited. In this test, when the test piece which was ignited did not reach the 25 mm line in the device and when the materials which fall from the test piece which was ignited did not catch fire, then the electrolyte tested was evaluated as resistant to flames.

<Self-extinguishability Evaluation>

According to the UL test standards, 1.0 ml of a sample of the electrolyte to be tested was infiltrated into noncombustible quartz fibers to prepare a sample piece of 127 mm × 12.7 mm, and the test piece was ignited. In this test, when the test piece which was ignited self-extinguished between the 25 mm and 100 mm lines in the device and when the materials falling from the ignited test piece did not catch fire, then the electrolyte tested was evaluated as self-extinguishable.

<Combustibility Evaluation>

When the ignited test piece exceeded the 100 mm line in the device, then the electrolyte tested was evaluated as combustible.

[Fabrication of Non-aqueous Electrolyte Secondary Cell]

For the positive electrode active material, herein used was a cobalt oxide of a chemical formula $LiCoO_2$. To 100 parts of $LiCoO_2$, added were 10 parts of acetylene black (electroconductivity aid) and 10 parts of Teflon binder (binder resin), and these were kneaded in an organic solvent (mixed solvent of ethyl acetate/ethanol, 50/50 % by volume). The resulting mixture was rolled into a thin, positive electrode sheet having a thickness of 100 μm and a width of 40 mm.

Next, a 25 μm-thick aluminium foil (collector) coated with an electroconductive adhesive was sandwiched between the thus-prepared, two positive electrode sheets, and the resulting structure was wound up along with a 150 μm-thick carbon film (negative electrode material) via a 25 μm-thick separator (porous film of polypropylene) put therebetween to construct a cylindrical electrode. The length of the positive electrode of the cylindrical electrode was about 260 mm.

The non-aqueous electrolyte prepared in the above was applied to the cylindrical electrode to construct a UM-3 size lithium cell.

-Measurement of Potential Window-

Using the cyclic voltammeter mentioned above, the lowermost value and the uppermost value of the phosphagen derivative used herein were measured under the condition mentioned above. The data are given in Table 2.

-Cell Stability Evaluation-

According to the charge-discharge test method described below, the charge-discharge capacity (mAh/g) of the non-aqueous electrolyte secondary cell fabricated herein was measured in the initial stage and after 50 charge-discharge cycles, from which the cell stability was evaluated. The result is given in Table 2.

--Measurement of Charge-Discharge Capacity--

The cell in which the weight of the positive electrode or the negative electrode is known was subjected to charge-discharge cycles at 20°C to obtain the charge-discharge curve of the cell. The charge quantity or the discharge quantity in the cycles was divided by the weight of the positive electrode or the negative electrode used in the cell to determine the charge-discharge capacity of the cell. The theoretical capacity of the positive electrode ($LiCoO_2$) used is 145 mAh/g; and that of the negative electrode (carbon film) is 350 mAh/g.

-Electrochemical Stability Evaluation-

The positive electrode potential was set at 5 V; and the negative electrode potential at 0 V. In that condition, the cell to be tested was electrically driven for 3 hours, and the solvent (non-aqueous electrolyte) was analyzed for the degree of decomposition through NMR and GC-MS. The data indicate the electrochemical stability of the cell tested. The result is given in Table 2.

-Low-temperature Discharge Characteristic Evaluation (measurement of low-temperature discharge capacity)-

The cell was subjected to 50 charge-discharge cycles. In each cycle, the uppermost voltage was 4.5 V, the lowermost voltage was 3.0 V, the discharge current was 100 mA, and the charge current was 50 mA. In each cycle, the cell was charged at 20°C, but discharged at low temperatures (-20°C, -10°C). The low-temperature discharge capacity of the cell was compared with the 20°C discharge capacity thereof. The discharge capacity reduction in the cell was obtained according to the formula described below. The result is given in Table 2.

$$\text{Discharge Capacity Reduction} = 100 - (\text{low-temperature discharge capacity}/20^\circ\text{C discharge capacity}) \times 100\ (\%).$$

(Example 6)

A non-aqueous electrolyte was prepared and tested for the self-extinguishability and the flame retardancy in the same manner as in the "preparation of non-aqueous electrolyte" in Example 5, except that the amount of γ-butyrolactone used was 20 ml and that of the phosphagen derivative was 80 ml (80 % by volume) . Also in the same manner as in Example 5, a non-aqueous electrolyte secondary cell was fabricated and tested for the potential window, the cell life stability, the electrochemical stability and the low-temperature discharge characteristic. The results are given in Table 2.

(Example 7)

A non-aqueous electrolyte was prepared and tested for the self-extinguishability and the flame retardancy in

the same manner as in the "preparation of non-aqueous electrolyte" in Example 6, except that a linear EO-type phosphagen derivative of formula (1) (in which X is the organic group (A) of formula (3), $Y^1$ to $Y^3$ and $Y^5$ to $Y^6$ are all single bonds, $R^1$ to $R^3$ and $R^5$ to $R^6$ are all ethoxy groups, and Z is oxygen, but in which the hydrogen element in the ethoxy groups are partially substituted with fluorine to such a degree that the fluorine content of the phosphagen derivative is 12.4 % by weight) was used. Also in the same manner as in Example 6, a non-aqueous electrolyte secondary cell was fabricated and tested for the potential window, the cell life stability, the electrochemical stability and the low-temperature discharge characteristic. The results are given in Table 2.

(Example 8)

A non-aqueous electrolyte was prepared and tested for the self-extinguishability and the flame retardancy in the same manner as in the "preparation of non-aqueous electrolyte" in Example 5, except that 97 ml of ethylene carbonate was used in place of 80 ml of γ-butyrolactone, the amount of the phosphagen derivative was 3 ml (3 % by volume), and a lithium salt $LiPF_6$ was used in place of $LiBF_4$. Also in the same manner as in Example 5, a non-aqueous electrolyte secondary cell was fabricated and tested for the potential window, the cell life stability, the electrochemical stability and the low-temperature discharge characteristic. The results are given in Table 2.

(Comparative Example 2)

A non-aqueous electrolyte was prepared and tested for the self-extinguishability and the flame retardancy in the same manner as in the "preparation of non-aqueous electrolyte" in Example 5, except that the linear EO-type phosphagen derivative of formula (1) (in which X is the organic group (A) of formula (3), $Y^1$ to $Y^3$ and $Y^5$ to $Y^6$ are all single bonds, $R^1$ to $R^3$ and $R^5$ to $R^6$ are all ethoxy groups, and Z is oxygen was not used. Also in the same manner as in Example 5, a non-aqueous electrolyte secondary cell was fabricated and tested for the potential window, the cell life stability, the electrochemical stability and the low-temperature discharge characteristic. The results are given in Table 2.

Table 2

| | Potential Window (V) | | Cell Stability (charge-discharge capacity (mAh/g)) | | Low-temperature Discharge Characteristic (discharge capacity reduction after 50 cycles) | | Self-Extinguish-ability or Flame Retardancy | Electro-chemical Stability |
|---|---|---|---|---|---|---|---|---|
| | uppermost value | Lowermost value | after initial charge-discharge | after 50 charge-discharge cycles | temperature of discharging : -10°C | temperature of discharging: -20°C | | |
| Example 5 | -0.5 | +6.5 | 145 | 138 | at most 40 % | at most 70 % | self-extinguish-able | stable |
| Example 6 | -0.5 | +6.5 | 145 | 137 | at most 40 % | at most 70 % | flame-retardant | stable |
| Example 7 | 0 | +6.8 | 145 | 138 | at most 40 % | at most 70 % | flame-retardant | stable |
| Example 8 | -0.5 | +6.5 | 145 | 138 | at most 40 % | at most 70 % | flame-retardant | stable |
| Comp. Ex. 2 | +0.3 | +8.5 | 145 | 130 | at least 50 % | at least 85 % | flame-retardant | unstable |

As in Examples 5 to 8 demonstrating the non-aqueous electrolyte secondary cells of the second aspect of the invention, the non-aqueous electrolyte used has good self-extinguishability or flame retardancy. It is therefore obvious that the cells of these Examples have the advantages of long-life stability, degradation resistance, electrochemical stability and low-temperature discharge capacity.

<Third Aspect of the Invention>

(Example 9)

[Preparation of Non-aqueous Electrolyte]

10 ml of a phosphagen derivative (this is a linear EO-type phosphagen derivative of formula (1) in which X is the organic group (A) of formula (3), $Y^1$ to $Y^3$ and $Y^5$ to $Y^6$ are all single bonds, $R^1$ to $R^3$ and $R^5$ to $R^6$ are all ethoxy groups, and Z is oxygen, having a flash point of 155°C) was added to 40 ml of γ-butyrolactone (aprotic organic solvent having a viscosity at 25°C of 1.7 mPa·s (1.7 cP)), the ratio of the phosphagen derivative being 20 % by volume. A lithium salt, $LiBF_4$ (concentration: 0.5 mol/kg) was added to this to prepare a non-aqueous electrolyte.
The electroconductivity of the phosphagen derivative used herein was measured in the lithium salt solution (0.5 mol/liter) according to the method mentioned hereinabove, and it was 7.5 mS/cm.
The thus-prepared, non-aqueous electrolyte was tested for the combustion profile, according to a method arranged from the UL94HB method of the UL (Underlighting Laboratory) standards. Concretely, in an atmospheric condition, this was ignited to check the flaming behavior thereof. The test data indicate the self-extinguishability and the flame retardancy of the electrolyte. The result is given in Table 3.

<Flame Retardancy Evaluation>

According to the UL test standards, 1.0 ml of a sample of the electrolyte to be tested was infiltrated into noncombustible quartz fibers to prepare a sample piece of 127 mm × 12.7 mm, and the test piece was ignited. In this test, when the test piece which was ignited did not reach the 25 mm line in the device and when the materials which fell from the ignited test piece did not catch fire, then the electrolyte tested was evaluated as resistant to flames.

<Self-extinguishability Evaluation>

According to the UL test standards, 1.0 ml of a sample of the electrolyte to be tested was infiltrated into noncombustible quartz fibers to prepare a sample piece of 127 mm × 12.7 mm, and the test piece was ignited. In this test, when the test piece which was ignited self-extinguished between the 25 mm and 100 mm lines in the device and when the materials which fell from the ignited test piece did not catch fire, then the electrolyte tested was evaluated as self-extinguishable.

<Combustibility Evaluation>

When the ignited test piece passed the 100 mm line in the device, then the electrolyte tested was evaluated as combustible.

[Fabrication of Non-aqueous Electrolyte Secondary Cell]

For the positive electrode active material, herein used was a cobalt oxide of a chemical formula $LiCoO_2$. To 100 parts of $LiCoO_2$, added were 10 parts of acetylene black (electroconductivity aid) and 10 parts of Teflon binder (binder resin), and these were kneaded in an organic solvent (mixed solvent of ethyl acetate/ethanol, 50/50 % by volume). The resulting mixture was rolled into a thin, positive electrode sheet having a thickness of 100 μm and a width of 40 mm.
Next, a 25 μm-thick aluminium foil (collector) coated with an electroconductive adhesive was sandwiched between the thus-prepared, two positive electrode sheets, and the resulting structure was wound up along with a 150 μm-thick carbon film (negative electrode material) via a 25 μm-thick separator (porous film of polypropylene) put therebetween to construct a cylindrical electrode. The length of the positive electrode of the cylindrical electrode was about 260 mm.
The non-aqueous electrolyte prepared in the above was applied to the cylindrical electrode to construct a UM-3 size lithium cell.

--Measurement of Charge-Discharge Capacity--

The non-aqueous electrolyte secondary cell fabricated herein was tested for the charge-discharge capacity (mAh/g) according to the test method described below in the initial stage and after 50 charge-discharge cycles. The data are given in Table 3.

-Method of Measurement of Charge-Discharge Capacity-

The cell in which the weight of the positive electrode or the negative electrode is known was subjected to charge-discharge cycles at 20°C to obtain the charge-discharge curve of the cell. The charge quantity or the discharge quantity in the cycles was divided by the weight of the positive electrode or the negative electrode used in the cell to determine the charge-discharge capacity of the cell. The data are given in Table 3. The theoretical capacity of the positive electrode ($LiCoO_2$) used is 145 mAh/g; and that of the negative electrode (carbon film) is 350 mAh/g.

-Measurement of Internal Resistance-

In the same manner as above, the internal resistance of the non-aqueous electrolyte secondary cell was measured. The data are given in Table 3.

-Low-temperature Discharge Characteristic Evaluation (measurement of low-temperature discharge capacity)-

The cell was subjected to 50 charge-discharge cycles. In each cycle, the uppermost voltage was 4.5 V, the lowermost voltage was 3.0 V, the discharge current was 100 mA, and the charge current was 50 mA. In each cycle, the cell was charged at 20°C, but discharged at low temperatures (-20°C, -10°C). The low-temperature discharge capacity of the cell was compared with the 20°C discharge capacity thereof. The discharge capacity reduction in the cell was obtained according to the formula described below. The result is given in Table 3.

Discharge Capacity Reduction

= 100 - (low-temperature discharge capacity/20°C discharge

capacity) $\times$ 100 (%).

(Example 10)

A non-aqueous electrolyte was prepared and tested for the self-extinguishability and the flame retardancy in the same manner as in the "preparation of non-aqueous electrolyte" in Example 9, except that $\gamma$-butyrolactone was not used and the amount of the phosphagen derivative used (this is a linear EO-type phosphagen derivative of formula (1) in which X is the organic group (A) of formula (3), $Y^1$ to $Y^3$ and $Y^5$ to $Y^6$ are all single bonds, $R^1$ to $R^3$ and $R^5$ to $R^6$ are all ethoxy groups, and Z is oxygen) was 50 ml.

The electroconductivity of the phosphagen derivative used herein was measured in the lithium salt solution (0.5 mol/liter) according to the method mentioned hereinabove, and it was 2.0 mS/cm.

Also in the same manner as in Example 9, a non-aqueous electrolyte secondary cell was fabricated and tested for the charge-discharge capacity, the internal resistance and the low-temperature discharge characteristic. The results are given in Table 3.

(Example 11)

A non-aqueous electrolyte was prepared and tested for the self-extinguishability and the flame retardancy in the same manner as in the "preparation of non-aqueous electrolyte" in Example 9, except that 10 ml (20 % by volume) of the phosphagen derivative was used and combined with an additional phosphagen derivative (this is a linear EO-type phosphagen derivative of formula (1) in which X is the organic group (A) of formula (3), $Y^1$ to $Y^3$ and $Y^5$ to $Y^6$ are all single bonds, $R^1$ to $R^3$ and $R^5$ to $R^6$ are all ethoxy groups, and Z is oxygen, but in which the hydrogen element in the ethoxy groups are partially substituted with fluorine to such a degree that the fluorine content of the phosphagen derivative is 12.4 % by weight) was used to such that the additional phosphagen derivative content was 60 % by volume.

The electroconductivity of the combined phosphagen derivative used herein was measured in the lithium salt solution (0.5 mol/liter) according to the method mentioned hereinabove, and it was 4.5 mS/cm.

Also in the same manner as in Example 9, a non-aqueous electrolyte secondary cell was fabricated and tested for the charge-discharge capacity, the internal resistance and the low-temperature discharge characteristic. The results are given in Table 3.

(Example 12)

A non-aqueous electrolyte was prepared and tested for the self-extinguishability and the flame retardancy in the same manner as in the "preparation of non-aqueous electrolyte" in Example 9, except that 40 ml of γ-butyrolactone was replaced with 48.5 ml of ethylene carbonate, the amount of the phosphagen derivative used (this is a linear EO-type phosphagen derivative of formula (1) in which X is the organic group (A) of formula (3), $Y^1$ to $Y^3$ and $Y^5$ to $Y^6$ are all single bonds, $R^1$ to $R^3$ and $R^5$ to $R^6$ are all ethoxy groups, and Z is oxygen) was 1.5 ml (3 % by volume), and the lithium salt $LiBF_4$ was replaced with $LiPF_6$.
The electroconductivity of the phosphagen derivative used herein was measured in the lithium salt solution (0.5 mols/liter) according to the method mentioned hereinabove, and it was 7.5 mS/cm.
Also in the same manner as in Example 9, a non-aqueous electrolyte secondary cell was fabricated and tested for the charge-discharge capacity, the internal resistance and the low-temperature discharge characteristic. The results are given in Table 3.

(Comparative Example 3)

A non-aqueous electrolyte was prepared and tested for the self-extinguishability and the flame retardancy in the same manner as in the "preparation of non-aqueous electrolyte" in Example 9, except that the phosphagen derivative (this is a linear EO-type phosphagen derivative of formula (1) in which X is the organic group (A) of formula (3), $Y^1$ to $Y^3$ and $Y^5$ to $Y^6$ are all single bonds, $R^1$ to $R^3$ and $R^5$ to $R^6$ are all ethoxy groups, and Z is oxygen) was not used and the amount of γ-butyrolactone used was 50 ml. Also in the same manner as in Example 9, a non-aqueous electrolyte secondary cell was fabricated and tested for the charge-discharge capacity, the internal resistance and the low-temperature discharge characteristic. The results are given in Table 3.

(Comparative Example 4)

A non-aqueous electrolyte was prepared and tested for the self-extinguishability and the flame retardancy in the same manner as in the "preparation of non-aqueous electrolyte" in Example 9, except that the phosphagen derivative (this is a linear EO-type phosphagen derivative of formula (1) in which X is the organic group (A) of formula (3), $Y^1$ to $Y^3$ and $Y^5$ to $Y^6$ are all single bonds, $R^1$ to $R^3$ and $R^5$ to $R^6$ are all ethoxy groups, and Z is oxygen) was replaced with a methoxyethoxyethoxyethoxyethoxyphosphagen derivative (this is a linear MEEEE-type phosphagen derivative of formula (1) in which X is the organic group (A) of formula (3), $Y^1$ to $Y^3$ and $Y^5$ to $Y^6$ are all single bonds, $R^1$ to $R^3$ and $R^5$ to $R^6$ are all methoxyethoxyethoxyethoxyethoxy groups, and Z is oxygen).
The electroconductivity of the phosphagen derivative used herein was measured in the lithium salt solution (0.5 mol/liter) according to the method mentioned hereinabove, and it was 0.1 mS/cm.
Also in the same manner as in Example 9, a non-aqueous electrolyte secondary cell was fabricated and tested for the charge-discharge capacity, the internal resistance and the low-temperature discharge characteristic. The results are given in Table 3.

Table 3

| | Electro-conductivity of Phosphagen Derivative (0.5 mols/liter in lithium salt solution) (mS/cm) | Charge-Discharge Capacity of Cell (mAh/g) | | Low-temperature Discharge Characteristic (discharge capacity reduction after 50 cycles) | | Self-extinguishability or Flame Retardancy | Internal Resistance (Ω) |
|---|---|---|---|---|---|---|---|
| | | after initial charge-discharge | after 50 charge-discharge cycles | temperature of discharging: -10°C | temperature of discharging: -20°C | | |
| Example 9 | 7.5 | 145 | 145 | at most 40 % | at most 70 % | self-extinguishable | 0.19 |
| Example 10 | 2.0 | 145 | 140 | at most 40 % | at most 70 % | flame-retardant | 0.21 |
| Example 11 | 4.5 | 145 | 142 | at most 40 % | at most 70 % | flame-retardant | 0.22 |
| Example 12 | 7.5 | 145 | 145 | at most 40 % | at most 70 % | flame-retardant | 0.19 |
| Co. Ex. 3 | - | 145 | 143 | at least 50 % | at least 85 % | flame-retardant | 0.18 |

| | | | | | | | |
|---|---|---|---|---|---|---|---|
| Co. Ex. 4 | 0.1 | - | - | - | - | flame-retardant | 0.35 |

In Comparative Example 4, the cell test for measurement of charge-discharge capacity and for determination of low-temperature discharge characteristic was impossible, as the cell could not be charged and discharged.

As in Examples 9 to 12 demonstrating the non-aqueous electrolyte secondary cells of the third aspect of the invention, the non-aqueous electrolyte used has good self-extinguishability or flame retardancy. It is therefore obvious that the cells of these Examples have the advantages of high charge-discharge capacity, low internal resistance and good low-temperature discharge capacity.

<Fourth Aspect of the Invention>

(Example 13)

[Preparation of Non-aqueous Electrolyte]

A lithium salt, $LiPF_6$ was dissolved in 50 ml of a phosphagen derivative (this is a linear EO-type phosphagen derivative of formula (2) in which X is the organic group (A) of formula (3), $Y^1$ to $Y^5$ are all single bonds, $R^1$ to $R^5$ are all ethoxy groups, and Z is oxygen, having a viscosity at 25°C of 5.8 mPa·s (5.8 cP) and a flash point of 155°C) to a lithium salt concentration of 0.5 mols/kg to prepare a non-aqueous electrolyte.

The dielectric constant at 25°C of the phosphagen derivative used herein was measured, using the device mentioned above under the condition also mentioned above, and it was 18.5.

The thus-prepared, non-aqueous electrolyte was tested to determine the combustion profile, according to a method based on the UL94HB method of the UL (Underlighting Laboratory) standards. Concretely, in an atmospheric condition, this was ignited to check the flaming behavior thereof. The test data indicate the self-extinguishability and the flame retardancy of the electrolyte. The result is given in Table 4.

<Flame Retardancy Evaluation>

According to the UL test standards, 1.0 ml of a sample of the electrolyte to be tested was infiltrated into noncombustible quartz fibers to prepare a sample piece of 127 mm × 12.7 mm, and the test piece was ignited. In this test, when the test piece ignited did not reach the 25 mm line of the device and when the materials which fell from the ignited test piece did not catch fire, then the electrolyte tested was evaluated as resistant to flames.

<Self-extinguishability Evaluation>

According to the UL test standards, 1.0 ml of a sample of the electrolyte to be tested was infiltrated into noncombustible quartz fibers to prepare a 127 mm × 12.7 mm sample piece, and the test piece was ignited. In this test, when the test piece which was ignited self-extinguished in the 25 to 100 mm line of the device and when the materials which fell from the ignited test piece did not catch fire, then the electrolyte tested was evaluated as self-extinguishable.

<Combustibility Evaluation>

When the ignited test piece exceeded the 100 mm line in the device, then the electrolyte tested was evaluated as combustible.

[Fabrication of Non-aqueous Electrolyte Secondary Cell]

For the positive electrode active material, herein used was a cobalt oxide of a chemical formula $LiCoO_2$. To 100 parts of $LiCoO_2$, added were 10 parts of acetylene black (electroconductivity aid) and 10 parts of Teflon binder (binder resin), and these were kneaded in an organic solvent (mixed solvent of ethyl acetate/ethanol, 50/50 % by volume). The resulting mixture was rolled into a thin, positive electrode sheet having a thickness of 100 µm and a width of 40 mm.

Next, a 25 µm-thick aluminium foil (collector) coated with an electroconductive adhesive was sandwiched between the thus-prepared, two positive electrode sheets, and the resulting structure was wound up along with a 150 µm-thick carbon film (negative electrode material) via a 25 µm-thick separator (porous film of polypropylene) put therebetween to construct a cylindrical electrode. The length of the positive electrode of the cylindrical electrode was about 260 mm.

The non-aqueous electrolyte prepared in the above was applied to the cylindrical electrode to construct a UM-3 size lithium cell.

--Measurement of Charge-Discharge Capacity, Evaluation of Long-term Stability--

The non-aqueous electrolyte secondary cell fabricated herein was tested at 20°C for the charge-discharge capacity (mAh/g) according to the test method used in "measurement of charge-discharge capacity", in the initial stage and after 20 charge-discharge cycles. The test data indicate the long-term stability of the cell tested. The result is given in Table 4.

-Low-temperature Discharge Characteristic Evaluation (measurement of low-temperature discharge capacity)-

The non-aqueous electrolyte secondary cell fabricated herein was subjected to 50 charge-discharge cycles. In each cycle, the uppermost voltage was 4.5 V, the lowermost voltage was 3.0 V, the discharge current was 100 mA, and the charge current was 50 mA. In each cycle, the cell was charged at 20°C, but discharged at low temperatures (-20°C, -10°C). The low-temperature discharge capacity of the cell was compared with the 20°C discharge capacity thereof. The discharge capacity reduction in the cell was obtained according to the formula below. The result is given in Table 3.

Discharge Capacity Reduction

= 100 - (low-temperature discharge capacity/20°C discharge

capacity) $\times$ 100 (%).

(Example 14)

A non-aqueous electrolyte was prepared and tested for the self-extinguishability and the flame retardancy in the same manner as in the "preparation of non-aqueous electrolyte" in Example 13, except that used was a linear MO-type phosphagen derivative of formula (2) (in which X is the organic group (A) of formula (3), $Y^1$ to $Y^5$ are all single bonds, $R^1$ to $R^5$ are all methoxy groups, and Z is oxygen) having a viscosity at 25°C of 4.8 mPa·s (cP) and a flash point of 150°C, in place of the linear EO-type phosphagen derivative of formula (2) (in which X is the organic group (A) of formula (3), $Y^1$ to $Y^5$ are all single bonds, $R^1$ to $R^5$ are all ethoxy groups, and Z is oxygen).

The dielectric constant at 25°C of the phosphagen derivative used herein was measured, using the device mentioned above under the condition also mentioned above, and it was 18.0.

Also in the same manner as in Example 13, a non-aqueous electrolyte secondary cell was fabricated and tested for the charge-discharge capacity to indicate the long-term stability of the cell, and for the low-temperature discharge characteristic. The results are given in Table 4.

(Example 15)

A non-aqueous electrolyte was prepared and tested for the self-extinguishability and the flame retardancy in the same manner as in the "preparation of non-aqueous electrolyte" in Example 13, except that used was a linear EO-type phosphagen derivative of formula (2) (in which X is the organic group (A) of formula (3), $Y^1$ to $Y^5$ are all single bonds, $R^1$ to $R^5$ are all methoxy groups, and Z is oxygen, but in which the hydrogen element in the ethoxy groups are partially substituted with fluorine to such a degree that the fluorine content of the phosphagen derivative is 12.4 % by weight), having viscosity at 25°C of 11.4 mPa·s (11.4 cP) and a flash point of 257°C.

The dielectric constant at 25°C of the phosphagen derivative used herein was measured, using the device mentioned above under the condition also mentioned above, and it was 39.

Also in the same manner as in Example 13, a non-aqueous electrolyte secondary cell was fabricated and tested for the charge-discharge capacity to indicate the long-term stability of the cell, and for the low-temperature discharge characteristic. The results are given in Table 4.

(Comparative Examples 5 and 6)

A non-aqueous electrolyte was prepared and tested for the self-extinguishability and the flame retardancy in the same manner as in the "preparation of non-aqueous electrolyte" in Example 13, except that used was a cyclic MEE-type phosphagen derivative having the structural formula shown below in which R's are all methoxyethoxyethoxy groups, and having a viscosity at 25°C of 59.6 mPa·s (59.6 cP), in place of the linear EO-type phosphagen derivative of formula (2) (in which X is the organic group (A) of formula (3), $Y^1$ to $Y^5$ are all single bonds, $R^1$ to $R^5$ are all ethoxy

groups, and Z is oxygen).

Structural Formula:

$$(PNR_2)_3$$

Also in the same manner as in Example 13, a non-aqueous electrolyte secondary cell was fabricated and tested for the charge-discharge capacity to indicate the long-term stability of the cell, and for the low-temperature discharge characteristic. However, since the viscosity of the phosphagen derivative used was too high, the electroconductivity thereof was low, and in addition, the charge-discharge capacity of the cell was not good. The results are given in Table 4 (Comparative Example 5).
The dielectric constant at 25°C of the phosphagen derivative used in this Comparative Example was measured, using the device mentioned above under the condition also mentioned above, and it was 10.0.
On the other hand, 30 % by volume of diethyl carbonate (having a viscosity at 25°C of 0.75 mPa·s (0.75 cP)) was added to the non-aqueous electrolyte prepared in the above to prepare a different non-aqueous electrolyte. Using this, a non-aqueous electrolyte secondary cell was fabricated and tested for the charge-discharge capacity to indicate the long-terms stability of the cell, also in the same manner as above. In the cell, the viscosity of the non-aqueous electrolyte was lowered and had good electroconductivity, and the cell had good charge-discharge capacity. The cell was tested for the low-temperature discharge characteristic. The results are given in Table 4 (Comparative Example 6).

Table 4

| | Dielectric Constant of Phosphagen Derivative | Charge-Discharge Capacity of Cell (mAh/g) | | Low-temperature Discharge Characteristic (discharge capacity reduction after 50 cycles) | | Self-extinguish-ability or Flame Retardancy |
|---|---|---|---|---|---|---|
| | | after initial charge-discharge | after 20 charge-discharge cycles | temperature of discharging : -10°C | temperature of discharging: -20°C | |
| Example 13 | 18.5 | 145 | 143 | at most 40 % | at most 70 % | flame-retardant |
| Example 14 | 18.0 | 145 | 143 | at most 40 % | at most 70 % | flame-retardant |
| Example 15 | 39.0 | 145 | 140 | at most 40 % | at most 70 % | flame-retardant |
| Co. Ex. 5 | 10.0 | 93 | 55 | at most 40 % | at most 70 % | flame-retardant |
| Co. Ex. 6 | - | 145 | 140 | at most 40 % | at most 70 % | self-extinguishable |

INDUSTRIAL APPLICABILITY

The first aspect of the invention provides a non-aqueous electrolyte cell which: is free of the risk of igniting, is free of the risk of exploding and igniting when there is a short circuit and is thus safe; has therein a non-aqueous electrolyte having a low interfacial resistance and excellent low-temperatures discharge properties and; has excellent cell capabilities such as high voltage and high discharge capacity.

The second aspect of the invention provides a non-aqueous electrolyte secondary cell which: has excellent long term stability which is required for cells; is safe; has excellent self extinguishability or flame retardancy and has excellent resistance to deterioration; has therein a non-aqueous electrolyte having low interfacial resistance; and has excellent electrochemical stability and low-temperature discharge properties.

The third aspect of the invention provides a non-aqueous electrolyte secondary cell which: has excellent cell capabilities such as cell capacity which is required for cells; has excellent self extinguishability or flame retardancy; has excellent resistance to deterioration; has therein a non-aqueous electrolyte having low interfacial resistance; has low internal resistance and excellent low-temperature discharge properties.

The fourth aspect of the invention provides a non-aqueous electrolyte secondary cell which: has excellent cell capabilities such as cell capacity, which is required for cells; has excellent self extinguishability or flame retardancy; has excellent resistance to deterioration and discharge properties at low temperatures; has therein a non-aqueous electrolyte having low interfacial resistance; and has excellent long-term stability since only a phosphate derivative is used as the solvent in the electrolyte; and is easy to fabricate.

**Claims**

1. A non-aqueous electrolyte cell comprising a non-aqueous electrolyte that contains lithium ions and a phosphagen derivative having a flash point of not lower than 100°C, and a positive electrode, and a negative electrode capable of absorbing and releasing lithium.

2. The non-aqueous electrolyte cell as claimed in claim 1, wherein the viscosity at 25°C of the non-aqueous electrolyte is at most 10 mPa·s (cP).

3. The non-aqueous electrolyte cell as claimed in claim 1 or 2, wherein the non-aqueous electrolyte contains an aprotic organic solvent.

4. The non-aqueous electrolyte cell as claimed in claim 3, wherein the aprotic organic solvent is a cyclic ester compound.

5. The non-aqueous electrolyte cell as claimed in claim 4, wherein the cyclic ester compound contains ethylene carbonate or γ-butyrolactone.

6. The non-aqueous electrolyte cell as claimed in claim 4, wherein the cyclic ester compound contains ethylene carbonate, the non-aqueous electrolyte contains $LiPF_6$, and the phosphagen derivative content of the non-aqueous electrolyte is larger than 2.5 % by volume.

7. The non-aqueous electrolyte cell as claimed in any of claims 1 to 6, wherein the phosphagen derivative is represented by any of the following general formula (1) or (2) :

Formula (1)

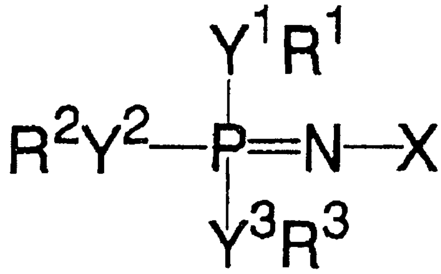

wherein $R^1$, $R^2$ and $R^3$ each represents a monovalent substituent or a halogen element; X represents an organic group containing at least one element selected from carbon, silicon, germanium, tin, nitrogen, phosphorus, arsenic, antimony, bismuth, oxygen, sulfur, selenium, tellurium and polonium; and $Y^1$, $Y^2$ and $Y^3$ each represents a divalent linking group, a divalent element or a single bond,

Formula (2)

$$(PNR^4{}_2)n$$

wherein $R^4$ represents a monovalent substituent, or a halogen element; and n falls between 3 and 15.

**8.** A non-aqueous electrolyte secondary cell comprising a non-aqueous electrolyte that contains a supporting salt, an organic solvent and a phosphagen derivative, and a positive electrode, and a negative electrode;
wherein the potential window of the phosphagen derivative is such that its lowermost limit is at most +0.5 V and its uppermost limit is at least +4.5 V, and
the potential window of the organic solvent is wider than that of the phosphagen derivative.

**9.** The non-aqueous electrolyte secondary cell as claimed in claim 8, wherein the potential window of the phosphagen derivative is such that its lowermost limit is at most 0 V and its uppermost limit is at least +5 V.

**10.** The non-aqueous electrolyte secondary cell as claimed in claim 8 or 9, wherein the phosphagen derivative satisfies at least one of the requirements that (1) its viscosity at 25°C is at most 100 mPa·s (100 cP), (2) its flash point is not lower than 100°C, and (3) its molecular structure has a halogen-containing substituent.

**11.** The non-aqueous electrolyte secondary cell as claimed in any of claims 8 to 10, wherein the organic solvent contains an aprotic organic solvent.

**12.** The non-aqueous electrolyte secondary cell as claimed in claim 11, wherein the aprotic organic solvent satisfies at least one of the requirements that (1) it contains any of cyclic ester compounds or linear ester compounds, and (2) its viscosity at 25°C is at most 100 mPa·s (100 cP).

**13.** The non-aqueous electrolyte secondary cell as claimed in any of claims 8 to 11, wherein the supporting salt contains $LiPF_6$, the organic solvent contains ethylene carbonate, and the phosphagen derivative content of the non-aqueous electrolyte falls between 1.5 and 2.5 % by volume.

**14.** The non-aqueous electrolyte secondary cell as claimed in any of claims 8 to 11, wherein the supporting salt contains $LiPF_6$, the organic solvent contains ethylene carbonate, and the phosphagen derivative content of the non-aqueous electrolyte is larger than 2.5 % by volume.

**15.** A non-aqueous electrolyte secondary cell comprising a non-aqueous electrolyte that contains a supporting salt and a phosphagen derivative of which the electroconductivity in a lithium salt solution (0.5 mol/liter) is at least 2.0

mS/cm, and a positive electrode, and a negative electrode.

**16.** The non-aqueous electrolyte secondary cell as claimed in claim 15, wherein the electroconductivity of the phosphagen derivative in a lithium salt solution (0.5 mol/liter) is at least 4.0 mS/cm.

**17.** The non-aqueous electrolyte secondary cell as claimed in claim 15 or 16, wherein the supporting salt contains $LiPF_6$, the non-aqueous electrolyte contains ethylene carbonate, and the phosphagen derivative content of the non-aqueous electrolyte falls between 1.5 and 2.5 % by volume.

**18.** The non-aqueous electrolyte secondary cell as claimed in claim 15 or 16, wherein the supporting salt contains $LiPF_6$, the non-aqueous electrolyte contains ethylene carbonate, and the phosphagen derivative content of the non-aqueous electrolyte is larger than 2.5 % by volume.

**19.** A non-aqueous electrolyte secondary cell comprising a non-aqueous electrolyte that contains a supporting salt and a phosphagen derivative whose dielectric constant at 25°C is at least 15 and the viscosity is at most 20 mPa·s (20 cP), and a positive electrode, and a negative electrode.

**20.** The non-aqueous electrolyte secondary cell as claimed in claim 19, wherein the dielectric constant at 25°C of the phosphagen derivative is at least 30.

**INTERNATIONAL SEARCH REPORT**

International application No.
PCT/JP00/05053

**A. CLASSIFICATION OF SUBJECT MATTER**
Int.Cl$^7$. H01M10/40

According to International Patent Classification (IPC) or to both national classification and IPC

**B. FIELDS SEARCHED**

Minimum documentation searched (classification system followed by classification symbols)
Int.Cl$^7$. H01M10/40

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2000 |
| Kokai Jitsuyo Shinan Koho | 1971-2000 | Jitsuyo Shinan Toroku Koho | 1996-2000 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| EX | JP, 2000-30740, A (Toyota Central Research and Development Laboratories, Inc.), 28 January, 2000 (28.01.00), Claim 1; Par. No. [0020]; example, etc. (Family: none) | 1-20 |
| EX | JP, 2000-21442, A (SHIN-KOBE ELECTRIC MACHINERY CO., LTD.), 21 January, 2000 (21.01.00), Claims 1 to 3, etc. (Family: none) | 1-20 |
| X | JP, 11-191431, A (Sony Corporation), 13 July, 1999 (13.07.99), Claims 1 to 7; Par. Nos. [0023] to [0037]; example, etc. (Family: none) | 1-20 |
| X | JP, 11-144757, A (Bridgestone Corporation), 28 May, 1999 (28.05.99), Claim 1; Par. Nos. [0021] to [0027]; example, etc. (Family: none) | 1-20 |
| X | JP, 6-13108, A (Bridgestone Corporation), 21 January, 1994 (21.01.94), | 1-20 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 October, 2000 (16.10.00) | 24 October, 2000 (24.10.00) |

| Name and mailing address of the ISA/ | Authorized officer |
|---|---|
| Japanese Patent Office | |
| Facsimile No. | Telephone No. |

Form PCT/ISA/210 (second sheet) (July 1992)

**INTERNATIONAL SEARCH REPORT**

International application No.
PCT/JP00/05053

C (Continuation). DOCUMENTS CONSIDERED TO BE RELEVANT

| Category* | Citation of document, with indication, where appropriate, of the relevant passages | Relevant to claim No. |
|---|---|---|
| | Claims 1 to 3; Par. Nos. [0014] to [0027]; example, etc. (Family: none) | |

Form PCT/ISA/210 (continuation of second sheet) (July 1992)